# EUROPEAN PATENT SPECIFICATION

(11) **EP 4 466 408 B1**
(45) Date of publication and mention of the grant of the patent: **11.11.2026**
(21) Application number: 23702379.1
(22) Date of filing: 20.01.2023
(51) Int. Cl.: E02B 17/00, E02B 17/04, G01S 17/89, E04H 12/34, E04H 12/08, E02B 17/02, E04H 12/22, F03D 13/10

(54) **METHOD FOR FITTING A PLATFORM OVER A FOUNDATION PILE AND FOUNDATION PILE PROVIDED WITH SUCH PLATFORM**
VERFAHREN ZUM ANBRINGEN EINER PLATTFORM ÜBER EINEM FUNDAMENTPFAHL UND MIT SOLCH EINER PLATTFORM AUSGESTATTETER FUNDAMENTPFAHL
PROCÉDÉ D'AJUSTEMENT D'UNE PLATE-FORME SUR UN PIEU DE FONDATION ET PIEU DE FONDATION POURVU D'UNE TELLE PLATE-FORME

(30) Priority: 21.01.2022 NL 2030640
(43) Date of publication of application: 27.11.2024
(73) Proprietor: Sif Holding N.V., 6041 TA Roermond (NL)
(72) Inventor: KURSTJENS, Michel Antoin Marie, 6041 TA Roermond (NL)
(74) Representative: V.O.
(86) International application number: PCT/NL2023/050026
(87) International publication number: WO 2023/140733

(56) References cited:
- EP-A1- 3 882 416
- WO-A1-2020/106146
- WO-A2-2019/073060
- US-A1- 2020 173 420
- DATABASE WPI Week 200918, Derwent World Patents Index; AN 2009-F55888, XP002807335

## Description

The invention relates to a method for fitting a platform over an upper end of a foundation pile, as defined by claim 1, and the invention relates to a method for forming a filling element for use in fitting a platform over an upper end of a foundation pile, as defined by claim 12. Preferred embodiments of the invention follow from the dependent claims.

For structures supported by at least one foundation pile, such as offshore wind generators, it is known to provide a foundation pile with a platform at or near an upper end thereof, for example such that it extends around the upper end of the foundation pile near a lower end of for example a tower supported on said foundation pile. Such platform can for example provide for a landing arrangement for personnel, access to the tower and/or pile and for support of a maintenance crew when for example performing maintenance to the tower or pile, to the wind generator or other provision supported by the foundation pile.

Document JP2009046946A discloses a construction method for a high-rise tower. The dimension of the joint portion of the erected portion with the to-be-joined portion is measured in three-dimensions (3D) using a 3D laser scanner. The joint portion of the erected structure is prefabricated and the to-be-joined portion is corrected based on the measurement. The following structure is then built.

Document US2020/173420 discloses a gasket adapted for being placed between a transition piece and a monopile of a wind turbine.

EP2011924 discloses a concrete platform mounted to a foundation pile using a transition piece. The transition piece is made of concrete and is slid over a cylindrical upper end of the foundation pile, and at the upper end has a cylindrical portion above a flange. The platform has a cylindrical opening fitting over said cylindrical portion, such that it can rest on the flange.

WO2020/106146 discloses an offshore platform mounted over an upper end of a foundation pile. In this the upper end of the foundation pile is truncated conical outer surface. The platform comprises an opening with a similarly truncated conical peripheral surface, such that it can be slid over the upper end of the foundation pile, for forming a slip joint between the said outer surface of the foundation pile and the peripheral surface of the opening of the platform.

Providing a platform over an upper end of a foundation pile by a slip joint has the advantage that placing the platform can be accomplished by sliding the platform over the upper end of the pile, the joint being formed substantially by force of gravity. It has however been found that the surfaces of the fitting opening of the platform and the foundation pile that have to meet will not always fit properly, especially with increasing diameters of the foundation piles presently being used and introduced. Production tolerances that can be achieved without excessive costs to manufacturing will lead to surface irregularities, which prevent said proper fitting. This may lead to instability of said slip joint and to misalignments of the platform and the foundation pile. Moreover this may lead to excessive wear of the surfaces. Furthermore this may lead to improper positioning of the platform relative to the foundation pile, especially in axial position relative to the upper end of the foundation pile. In other words, the platform may come to be sitting too low or too high on the foundation pile.

It is an aim of the present disclosure to provide for an alternative method for fitting a platform over an upper end of a foundation pile. An aim of the present disclosure is to provide for a method for fitting a platform over an upper end of a foundation pile, overcoming at least one of the problems of the prior art at least partly.

In a method according to the disclosure for fitting a platform on an upper end of a foundation pile, a foundation pile is used of which said upper end has a truncated conical outer surface, and wherein the platform has an opening fitting over said upper end of the pile. Said opening is provided with a peripheral wall defining a truncated conical shape. According to an aspect of the disclosure between the truncated conical outer surface of the pile and the peripheral wall of the opening of the platform at least one filling element is positioned. Prior to fitting the platform over the pile a first scan is made of at least a portion of the truncated outer surface of the pile and a second scan is made of at least a portion of the peripheral wall of the opening, wherein the shape of the at least one filling element is formed and/or amended based on said first scan and second scan.

By scanning one or, preferably, more relevant portions of the said surfaces the at least one filling element can be shaped to exactly fit against the scanned surface portions, taking into account any deviations in said surface portions from intended truncated conical shaped outer surface portions of the foundation pile and/or truncated conical peripheral surface portions of the opening.

In embodiments the foundation pile can be made of a first material, a platform of a second material and the filling element or elements of a third material, wherein the third material is more pliable than the first and second material. The first material and the second material can be the same material or can be different materials.

In an aspect of the disclosure a series of filling elements is provided between the pile and the platform, wherein the shape of the individual filling elements is formed and/or amended based on said first and said second scan. The filling elements are preferably provided in a side-by-side arrangement, forming a ring of such filling elements around the said surface of the pile, between the truncated conical outer surface of the pile and the peripheral surface of the opening.

By providing a series of filling elements, the filling elements can be handled easily, whereas they can be used for filling substantially the entire interspace between the surface of the opening and the pile by placing them side-by-side.

The or each filling element is preferably formed and/or amended based on a specific position between the surface of the opening and the pile.

In a method according to the disclosure the or each first scan and the or each second scan can be made using at least one scanner, preferably a laser scanner, wherein scanning data of the at least one laser scanner is fed into a computer system, wherein a computer program is provided in said computer system for processing said scanning data.

In embodiments the computer program comprises a computer model of a desired truncated conical surface of the foundation pile and a computer model of a desired peripheral wall of the opening, wherein the computer program is designed for comparing the scanning data with the computer models and defining a computer defined shape of the at least one filling element based on such comparison.

In such embodiments for example ideal shapes of the truncated conical surfaces is defined, that is without deviations due to for example forming of the surfaces, which are compared with the actual shapes of said surfaces, which do have such deviations. Then a filling element or preferably a series of filling elements is made, taking into account said deviations, such that they fit exactly between said surfaces.

In embodiments the computer system comprises a computer model of a standard filling element, wherein the computer program is further designed to define a computer machining program for machining said standard filling element based on a comparison between the computer model of the standard filling element and the computer defined shape of said at least one filling element.

In such method a machining tool, such as a CNC operated machine, can be controlled by said computer program, for machining a standard filling element in order to shape it to the desired shape and dimensions for a given position.

In embodiments the computer program comprises a computer model of a preferred interspace between said peripheral surface of the opening and said truncated conical surface of the pile, wherein based on said scanning data deviations between the actual interspace and the preferred interspace are calculated, and wherein the or each filling element is machined based on said calculated deviations.

The disclosure further relates to a method of forming and/or amending a filling element for use in fitting a a platform with an opening over an upper end of a foundation pile. In such method a first scan is made of at least a first portion of the surface of the pile at a predetermined position and a second scan is made of at least a first portion of a peripheral surface of an opening of the platform, opposite the first portion of the pile surface. The at least one filling element then is machined to be fitted between said first portion of the surface of the foundation pile and said first portion of the peripheral surface of the opening, in close contact with the first surface portions.

In such method the or each filling element can be individually shaped to fit exactly in the desired position. The filling element or elements provide better stability of the joint between foundation pile and platform, provide improved alignment, prevent excessive wear and ensure a proper positioning of the platform. Preferably a series of filling elements is machined for filling the interspace between the surface of the foundation pile at said predefined position and the peripheral surface of the opening, in a side-by-side arrangement of the filling elements.

In an aspect the disclosure relates to an assembly of a foundation pile and a platform mounted with an opening over an upper end of said foundation pile (not claimed) . The upper end of said foundation pile has a truncated conical outer surface portion and said opening has a truncated conical inner surface portion. The platform is provided at a predetermined position relative to the foundation pile, such that a peripheral interspace is provided between the said surface portion of the pile and the said surface portion of the opening. The peripheral interspace is filled substantially by a series of filling elements, provided in a side-by-side arrangement.

The filling elements provide for a proper alignment and positioning of the platform relative to the foundation pile, preferably both in an axial direction of the foundation pile and in a radial direction, aligning a longitudinal axis of the foundation pile with a longitudinal axis of the opening.

In embodiments each of said filling elements has been machined for fitting at a specific position between said platform and said pile.

By individually machining the filling elements they can be shaped in a relatively easy manner to fit a specific location. Such filling elements can be handled relatively easily, and can for example be replaced if needed individually.

The or each filling element is preferably machined on at least a side surface facing the surface of the foundation pile or a side surface facing the peripheral surface of the opening, more preferably both of said side surfaces, based on scanning data obtained of the relevant surface portion of the pile and/or scanning data obtained of the relevant surface portion of the peripheral surface of the opening.

The invention will be further elucidated on the basis of exemplary embodiments which are represented in the drawings. The exemplary embodiments are given by way of non-limitative illustration of the invention. In the drawings:
Fig. 1 shows a schematic top view of a platform mounted over an upper end of a foundation pile;
Fig. 2 shows schematically a platform in a cross sectional side view along the line II - II in fig. 1 mounted over an upper end of a foundation pile;
Fig. 3 shows schematically in top view an upper end of a foundation pile with the platform mounted over the upper end, half of the platform broken away, showing a series of filling elements arranged on the surface of the foundation pile;
Fig. 4 in side view similar to fig. 2 a foundation pile with a partly broken away platform and a series of filling elements on the surface of the foundation pile;
Fig. 5 shows schematically a system for scanning surface portions of a surface of an upper end of a foundation pile and of a peripheral inner surface of an opening of a platform;
Fig. 6 shows schematically a representation of a desired interspace between a foundation pile and a platform, and a deviation thereof;
Fig. 7 shows schematically a representation of a filling element for positioning in an interspace as for example shown in fig. 6;
Fig. 8 shows schematically a representation of a filling element according to fig. 7, with an indication of a machined surface portion, for adjustment to a deviation between a desired interspace and a calculated interspace;
Fig. 9 shows schematically in top view similar to fig. 1 platform provided over an upper end of a foundation pile, with a deviation of the opening compared to a desired circular shape, and filling elements provided between the platform and the pile;
Fig. 10 shows schematically in top view part of a platform mounted over the upper end of a foundation pile, wherein the pile has a deviation from circular, for example at a welding seam, wherein a filling element is provided between the platform and the pile, compensating for the deviation;
Fig. 11 shows schematically in cross section side view part of a platform and or an upper end of a foundation pile, wherein an actual interspace is shown next with in striped line a surface of the pile as desired, wherein a filling element is shown filling said interspace, adapted to fit the actual interspace; and
Fig. 12A and B show schematically in cross sectional side view respectively a filling element, adapted based on scan data from opposite surface portions of a foundation pile and a platform, and in cross sectional side view a standard filling element from which the filling element according to fig. 12A is made.

In this description embodiments of the invention will be described with reference to the drawings by way of example only. These embodiments should by no means be understood as limiting the scope of the disclosure. At least all combinations of elements and features of the embodiments shown are also considered to have been disclosed herein. In this description the same or similar elements and features will be referred to by the same or similar reference signs. The drawings are not to scale, and can show exaggerations in order to more clearly show features of the claimed invention.

In this description expressions of orientation such as top, bottom, vertical etcetera are used for convenience only and refer to the orientation of the foundation pile as seen in the accompanying drawings.

In this description wording like substantially and generally should be understood as meaning that relatively small deviations from the feature or value they refer to are also considered to be covered, for example deviations of 20% or less, such as 15% or less or 10% or less.

In this description embodiments of a foundation pile are disclosed supporting a platform, wherein a wind turbine generator (WTG) is supported on the foundation pile, directly or indirectly. It will however be clear that a same combination of a foundation pile and platform according to the disclosure can be used for supporting other off-shore or on-shore constructions, such as but not limited to a drilling rig, connection station for electricity generators, light house or the like.

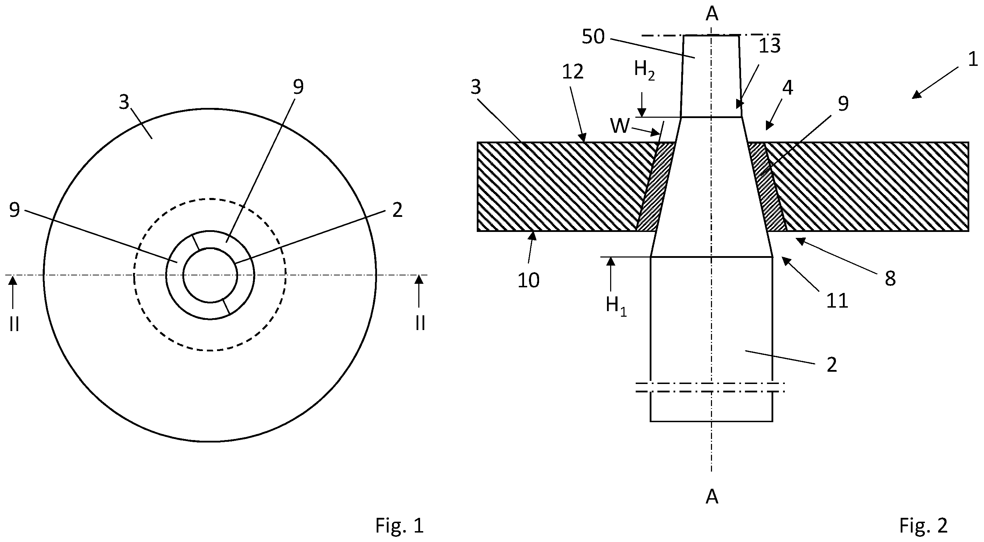

In this description a foundation pile is a pile supported in and/or on the earth, for example by driving the foundation pile into a water bedding such as a sea bedding, offshore, or into the ground onshore. The foundation pile is disclosed in the drawings as a monopile, for example made of metal, but could also be a pile made of different segments, and could be made of different materials, such as but not limited to concrete, or combination of materials, such as but not limited to concrete and metal. The foundation pile is preferably substantially hollow, at least over most of its height. A foundation pile can have a circular cross section, seen in top view, perpendicular to a longitudinal axis thereof, as shown by way of example for example in fig. 1, but could also have a different shape in cross section, for example polygonal, oval or the like, or combinations thereof. A foundation pile can have a diameter of several meters to more than ten meters, for example up to or above fifteen meters and its lower end and a wall thickness, if made of metal, of centimeters, for example more than 4 centimeters, such as for example 8 to 10 centimeters or more. These sizes are only given by way of example and should not be considered to limit the disclosure.

In this disclosure the platform can be made of any suitable material or combination of materials. The platform can for example be, but is not limited to, made of concrete or concrete and metal. The platform can for example have, but is not limited to a substantially circular shape, as shown for example in fig. 1, with an opening extending through the platform, for example a central opening. The opening can for example have a central longitudinal axis parallel to and preferably during use extending coaxial with the longitudinal axis of the foundation pile. The opening can have a substantially circular cross section, seen in top view, as for example shown in fig. 1, with a downward increasing diameter, as will be explained. The opening can also have a different shape, depending primarily on the shape and dimensions of the upper end of the foundation pile, as will be discussed.

In this disclosure the filling elements as will be discussed are preferably made of a plastic material, such as but not limited to polyurethane (PU), for example high density PU, which can also be referred to as PUR. The material of the filling elements may be more pliable than the material of the platform and more pliable than the material of the foundation pile. The filling elements can alternatively be made of a different plastic material, such as for example but not limited to PE, such as for example HDPE, which plastic material is preferably at least water resistant, especially salt-water resistant.

In embodiments the foundation pile is provided as a monopile made substantially of metal, the platform is made substantially of concrete and the filling elements are made substantially of PU.

Use of filling elements 9 made of a plastic material, such as but not limited to PU, has the additional advantage that the elements protect the relevant surfaces of the pile and the opening during mounting of the platform onto the pile, especially any coating provided on such surface, such as for example but not limited to paint or anti corrosion coating, sealant and the like.

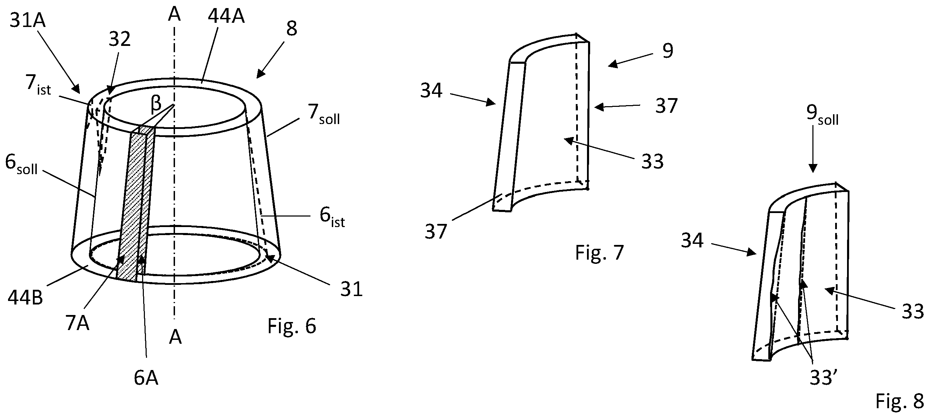

The drawings generally show an assembly 1 of a foundation pile 2 and a platform 3 mounted with an opening 4 over an upper end 5 of said foundation pile 2. A further structure can be mounted on the upper end 5, such as for example a tower of a wind turbine generator 50, which can be mounted to the foundation pile 2 in any suitable way, such as for example by a slip joint or a bolted connection. The upper end 5 of said foundation pile 2 has a truncated conical outer surface portion 6. Said opening 4 of the platform 3 has a truncated conical inner surface portion 7, which is formed substantially complementary to the outer surface portion 6 of the foundation pile. When the platform 3 is provided at a predetermined position relative to the foundation pile 2, a peripheral interspace 8 is provided between the said surface portion 6 of the foundation pile 2 and the said surface portion 7 of the opening 4 of the platform 3. The predetermined position can be a predetermined axial position, i.e. for example a predetermined height h₁ of a lower surface 10 of the platform 3 above the lower end 11 of the truncated conical upper end 5 of the foundation pile 2 or a predetermined distance h₂ of an upper surface 12 of the platform below the upper end surface 13 of the upper end 5 of the foundation pile 2. In fig. 7 by way of example a schematic representation of such peripheral interspace 8 is shown, for an embodiment in which the upper end 5 of the foundation pile 2 and the opening 4 have a substantially circular cross section. It will be directly clear to the skilled person how such interspace would be shaped if the upper end 5 and opening 4 have a different cross sectional shape.

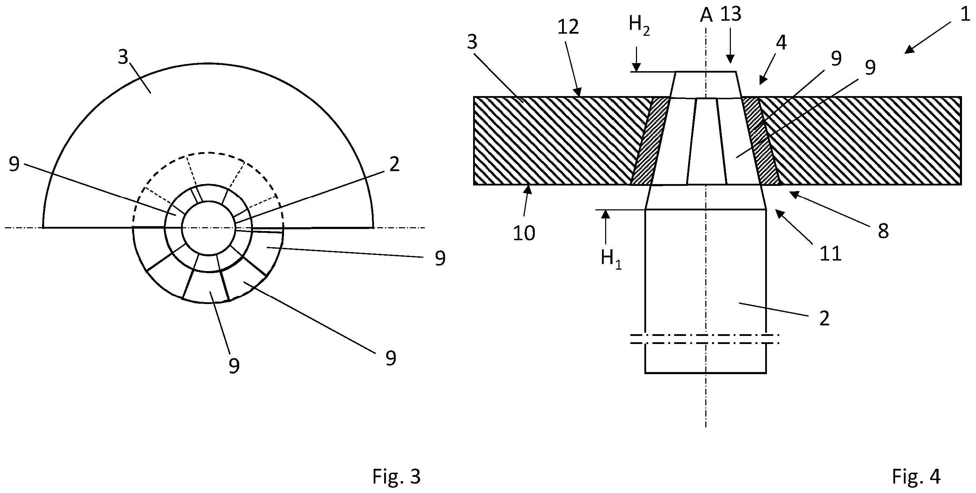

The peripheral interspace 8 is filled by one or more filling elements 9. Preferably the peripheral interspace 8 is filled by a series of filling elements 9, provided in a side-by-side arrangement, as for example schematically shown in fig. 3, 4, 9 and 10. According to the disclosure the filling elements 9 are individually formed and/or amended in shape and/or dimensions, for fitting in a specific position between the said surface 6 of the upper end 5 of the foundation pile 2 and the relevant platform surface 7.

As can be seen by way of example in fig. 6, the desired, ideal peripheral interspace 8 can be represented by a model showing a hollow truncated conical shape, defined by an ideal representation of the peripheral surface 7 of the opening 4 and the ideal representation of the surface portion 6 of the upper end 5 of the foundation pile 2. The upper and lower ends of the interspace 8 are then formed by two imaginary rings 44A, 44B. Such model can for example be represented by a computer model, using calculated surfaces 6, 7 as they should ideally be when all measurements are met exactly for said surfaces when fabricating said foundation pile and platform.

For fitting a platform 4 on an upper end 5 of a foundation pile 2, wherein said upper end 2 has a truncated conical outer surface 6, and wherein the platform 3 has an opening 4 fitting over said upper end 5 of the pile 2, said opening provided 4 with a peripheral wall 7 defining a truncated conical shape, it is known in the prior art to use a slip joint connection between the platform 3 and the foundation pile 2, wherein the platform 4 is lowered onto the upper end 5 of the pile 2, such that the conical surfaces 6, 7 meet and gravity forces the platform 3 onto the pile 2.

It is known that the manufacturing processes that are used for manufacturing the foundation pile and the platform, and the materials used, will lead to deviations from ideal shapes and dimensions of said surfaces. Manufacturing tolerances will necessarily lead to such deviations, as can for example deformations of portions of such surfaces. For example if a pile is rolled from steel plate and the seam thereof is then welded, this may lead to local un-roundness at the location of the seam, for example due to the welding process. These problems with production tolerances and deviations increases with an increase of the diameters of the foundation piles that are used, which diameters are expected to increase further in the future, for example due to an increase of the size and power of wind turbine generators, especially off-shore. The foundation piles can have a diameter of seven to ten meters or more. Such deviations have been found to be detrimental to slip joint connections, because at least this reduces the contact between the said surfaces of the opening and the pile, which can reduce stability and can increase wear. Moreover this may lead to misalignment of the foundation pile and the structure supported thereby, such as for example a wind turbine generator. Improving manufacturing processes or machining the surfaces of the platform and/or the pile will lead to high costs, if even possible without impairing the structural integrity of the parts and the structure formed therewith.

By way of example, the elements 9 can be made of plastic material, such as PU, for example a PU with a density of between 1.1 or more, for example 1.2 or more, such as for example between 1.20 and 1.25 g/cm³ (ASTM D 792-91). The filling elements can for example have a average thickness of between about 10 and about 70 mm, preferably between 20 and 50 mm, such as for example but not limited to about 35 mm.

In this disclosure a surface portion of a peripheral surface should be understood as including, but not limited to an entire peripheral surface or a part thereof, especially a segment of such peripheral surface. In fig. 6 surface portions 6A, 7A have been indicated by way of example on a model of an interspace 8. For example for a peripheral surface having an increasing or decreasing circular cross section in an axial direction of the platform, such as a platform or of the foundation pile, the surface portion can be formed by a circle segment of such surface including an angle B. For example between 1 and 200 such filling surface portions cq filling elements can be used. For example ten or more, such as for example 50 or more, such as for example but not limited to between 100 and 150 such surface portions can be defined on said peripheral surfaces and an equal number of filling elements can be used.

In a method and assembly according to the disclosure the platform 3, especially the opening 4 thereof, and the foundation pile 2, especially the upper end 5 thereof, are designed such that, with the platform 3 in said predetermined position, between the truncated conical outer surface 6 of the pile 2 and the peripheral wall 7 of the opening 4 of the platform 3 said peripheral interspace 8 is formed. The opening 4 in the platform 3 is deliberately designed larger than necessary for forming a direct slip joint between the surfaces 6 and 7. Filling elements 9 are provided in said interspace 8, substantially filling said interspace 8. When fitting the platform 3 with the filling elements 9 over the upper end of the pile 2, a slip joint is formed between inner surfaces 33 of the filling elements 9 and the outer surface 6 of the pile 2 and/or between outer surfaces 34 of the filling elements 9 and the peripheral inner surface 7 of the opening 4 of the platform 3. The width W of the designed interspace 8, measured between the opposing surfaces 6, 7, is for example about 35 mm on average. In embodiments as will be discussed standard filling elements 9 are used having a thickness T larger than the said width W, such that they can be shaped by removing material of the standard filling elements in order to make them fit for filling part of the interspace 8.

In a method according to the disclosure the filling element or elements 9 is/are made such that they fit in said space against opposite surface portions of said surfaces 6, 7. Prior to fitting the platform 3 over the pile 2 a first scan SC₁ is made of at least a portion 6 of the truncated outer surface 6 of the pile 2 and a second scan SC₂ is made of at least a portion 7 of the peripheral wall 7 of the platform. The shape of the at least one filling element 9 is formed and/or amended based on said first scan SC₁ and second scan SC₂. Preferably a series of filling elements 9 is provided between the pile 2 and the platform 3, wherein the shape of the individual filling elements 9 is formed and/or amended based on said first scan SC₁ and said second scan SC₂. Each filling element 9 can be made specifically for a specific position between the platform and the pile.

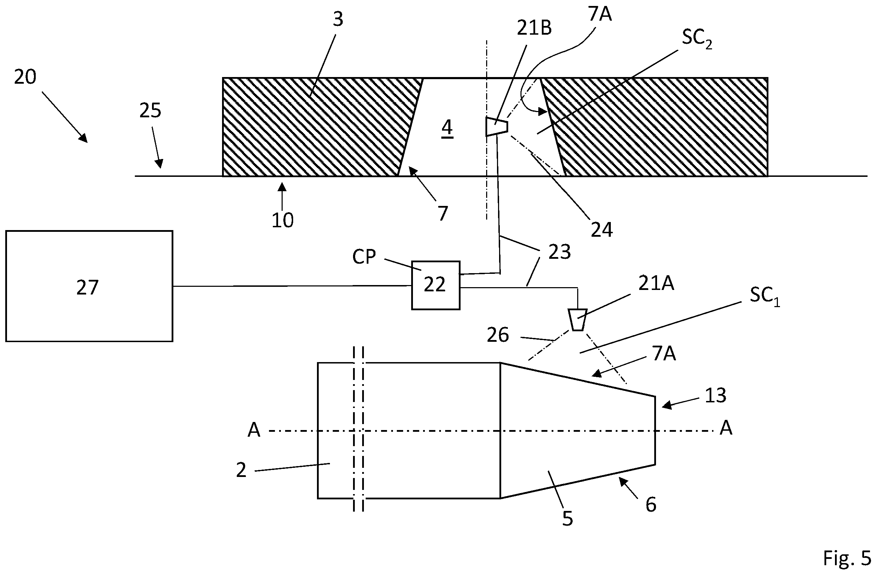

Fig. 5 shows schematically a system 20 for use in a method of the disclosure. With such system 20 the or each first scan SC₁ and the or each second scan SC₂ is made using at least one scanner 21. In embodiments the or each scanner 21 is a laser scanner. In the embodiment shown in fig. 5 the system 20 comprises a computer system 22, to which the or each scanner 21 is connected, by wire 23 or wireless. Scanning data of the at least one scanner 21 is fed into the computer system 22. A computer program CP is provided in said computer system 22 for processing said scanning data. It should be noted that the computer system 22 can comprise a single computer or multiple computers or similar data processing units, but can also be provided differently, for example entirely or in part cloud based.

In the embodiment of fig. 5 the system 20 is designed for scanning the inner surface 7 of the opening 4, or at least relevant parts thereof, as well as the outer surface 6 of the upper end 5 of the foundation pile 2, or at least a relevant part thereof. In the embodiment shown the foundation pile 2 is to this end laid in a horizontal position, for example rotatable around its longitudinal axis A - A extending horizontally, as shown in fig. 5. A first scanner 21A is placed next to the relevant surface 6 or part thereof, such that a first scan SC₁, schematically represented by striped lines 24, can be made of said surface 6 or part thereof. Scanning data is fed into the computer system 20. The platform 3 is placed with its bottom surface 10 on a surface area 25. A second scanner 21B is placed inside the opening 4, such that a second scan SC2, schematically represented by striped lines 26, can be made of said surface 7 or part thereof. Scanning data is fed into the computer system 20. Based on the scanning data the computer system can model the surfaces 6, 7 or portions 6A, 7A thereof, including any deviation from a desired surface or surface portion. These models of the surfaces or surface portions shall be referred to also as surfaces 6ᵢₛₜ and 7ᵢₛₜ.

The scanners 21A, 21B can be hand held scanners or can be (semi)automated scanners, for example tripod or robot or otherwise mounted scanners. Such scanners and scanner systems as such as well-known in the art. It shall be clear that scanning data as discussed can also be obtained differently, for example with the platform and/or pile in different orientations. In the embodiments shown the scanning data is obtained on-shore, with the pile not yet installed or even shipped out to a mounting location. It will however be clear that the scanning data can also be obtained at different locations, wherein for example the scanning can be performed after having mounted the foundation pile at a destined location. Then filling elements 9 can also be used for adjusting for any for example non-vertical position of the foundation pile.

In embodiments of the system 20 and method according to the disclosure the computer program CP comprises a computer model of a desired truncated conical surface 6ₛₒₗₗ of the foundation pile 2 and a computer model of a desired peripheral wall surface 7ₛₒₗₗ of the opening 4 of the platform 3. The computer program CP is designed for comparing the scanning data, i.e. the surface models 6ᵢₛₜ and 7ᵢₛₜ based on said scanning data with the computer models of the desired surfaces 6ₛₒₗₗ and 7ₛₒₗₗ as provided in the computer system 22. Comparing these models will show where deviations exist and what these deviations are, and can result in a model of the interspace 8 as for example shown in fig. 6. The computer program CP is further designed for defining a computer defined shape of the at least one filling element 9ₛₒₗₗ based on such comparison, as for example shown in fig. 7 and 8. Thus the or each filling element 9 can be specifically manufactured for a specific position between the platform 3 and the pile 2.

In fig. 5 the system 20 comprises or is at least connected to a machining system 27, here schematically shown, for forming and/or machining filling elements 9 to make them fit the intended position as filling element 9ₛₒₗₗ. The machining system 27 can for example comprise a CNC machining system. By way of example the machining system 27 such as a CNC based machining tool can shape a filling element 9 based on the computer defined shape as discussed here before, for example from a block of polyurethane or other suitable material, especially plastic, or from an already formed standard filling element 9, as will be discussed hereafter.

In the same or alternative embodiments the computer system 22 comprises a computer model of a standard filling element 9, wherein the computer program CP is further designed to define a computer machining program for machining said standard filling element 9 based on a comparison between the computer model of the standard filling element 9 and the computer defined shape of said at least one filling element 9ₛₒₗₗ. The said computer machining program can then be used for operating the machining system 27.

In the same or alternative embodiments the computer program CP comprises a computer model of a preferred interspace 8 between said peripheral surface 7 of the opening 4 and said truncated conical surface 6 of the pile 2, wherein based on the scanning data from the scanners 21 deviations between the actual interspace 8 and the preferred interspace 8 are calculated, and wherein the or each filling element 9 is machined based on said calculated deviations.

Thus a method of forming and/or amending a filling element 9 for use in fitting a platform 3 with an opening 4 over an upper end 5 of a foundation pile 2 can comprise the steps of making a first scan SC₁ of at least a first portion of the surface 6 of the pile 2 at a predetermined position and a second scan SC₂ of at least a first portion of a peripheral surface 7 of the opening 4 of the platform 3, opposite the first portion of the pile surface 6 and machining the at least one filling element 9 to be fitted between said first portion of the surface 6 of the foundation pile 2 and said first portion of the peripheral surface 7 of the opening 4. The filling element 9 is thus formed and/or amended such that it can be positioned in close contact with the first surface portions 6A, 7A. Said at least one filling element 9ₛₒₗₗ is preferably formed and/or machined such that during use it fills the actual interspace 8 between said first surface portions 6, 7.

As discussed, in a method according to the disclosure preferably a series of filling elements 9 is machined for filling the interspace 8 between the surface 6 of the foundation pile 2 at said predefined position and the peripheral surface 7 of the opening 4, in a side-by-side arrangement of the filling elements 9. As discussed a large number of filling elements 9 can be used in side-by-side relationship, with or without spaces between such elements 9, for example but not limited to between 100 en 150 such filling elements for a pile 2 with an upper diameter of the truncated conical upper end 5 of between for example but not limited to 7 and 10 meters. The number of filling elements can for example be chosen such that they each fill about 4 and 2 degrees of the circumference of the peripheral surface. In such embodiments standard filling elements 9 can be used which are substantially flat, which can then be machined for fitting the curved surfaces. Alternatively a standard filling element 9 can be formed having a predefined curved shape, especially as a relatively small number of such segments is used for filling the interspace 8.

In an assembly of a foundation pile 2 and a platform 3 mounted with an opening 4 over an upper end 5 of said foundation pile 2 according to the disclosure preferably each of said filling elements 9 has been machined for fitting at a specific position between said platform 3 and said pile 2, wherein the filling element is preferably machined on at least a surface 33 facing the surface 6 of the foundation pile 2 and/or a surface 34 facing the peripheral surface 7 of the opening 4, more preferably both of said side surfaces 33, 34, based on scanning data obtained of the relevant surface portion 6 of the pile 2 and/or scanning data obtained of the relevant surface portion 7 of the opening 4.

In embodiments the filling elements 9 can be mounted to one of the surfaces 6, 7 before mounting the platform 3 onto the foundation pile 2. This can be done with the pile and/or platform in a position as for example shown in fig. 5. Mounting the filling elements 9 can in embodiments be performed onshore. The filling elements 9 can for example be glued to one of the surfaces 6, 7. In an advantageous embodiment the filling elements 9 are mounted to the inner surface 7 of the opening 4 in the platform 3.

Fig. 6 schematically shows a model 30 of an interspace 8 between a foundation pile 2 and a platform 3. Said model can be a computer model formed by the computer system 22. In fig. 6 in solid lines an outer surface 7 is shown, representing a designed inner surface 7 of the opening 4 of the platform 3, and an inner surface 6 representing a designed outer surface portion of the upper end 5 of the pile 2. These surfaces 6, 7 can be referred to as the ideal surfaces. These are representations of the optimal surfaces 6, 7, with minimal to no deviations.

In fig. 6 in broken lines deviations from said designed surfaces 6, 7 are shown, which have been found by scanning the said surfaces 6, 7 of the pile 2 and platform 3, as for example disclosed with reference to fig. 5. In fig. 6 at the lower right hand side in broken lines a deviation 31 from the designed surface 6' is shown. Said deviation 31 is the result of a non-circular shape of the lower end of the interspace 8. The outer surface 6 of the pile at that level has a non-circular shape, due to for example manufacturing tolerances. This also means that the inclination of the outer surface 6 in that position is different from the inclination of said surface 6 directly opposite said position. This would mean that if a platform 3 would be lowered with an opening 4 directly onto the outer surface 6 of the pile 2 for forming a slip joint, the platform would not be able to be lowered to a proper position. The platform 3 would tilt relative to the longitudinal axis A - A or would sit in a wrong axial position, not being able to be lowered enough onto the pile. Moreover the contact between the surfaces 6 and 7 of pile and platform opening 4 would be incomplete and therefore sub optimal. Also a deviation 31a is shown at the top left hand side, in the outer surface 7.

Similarly in fig. 6 in broken lines an example is shown of an intended deviation 32, forming a notch for example for accommodating an extension provided on the outer surface of the pile 2.

By using the model and the scanning data as disclosed, a model can be formed of the actual interspace 8 between the foundation pile 2 and the platform 3 to be used together. Then filling elements 9, 9ₛₒₗₗ can be formed, for example as shown in fig. 7 and 8, for filling said actual interspace 8, for example using a system as discussed with reference to fig. 5. The filling elements 9 can be individually shaped, in order to properly fill the actual interspace 8. In embodiments a standard filling element 9 can be used as starting point, for example as shown in fig. 7, which can be machined on an inner surface 33 and/or an opposite outer surface 34, based on the scanning data and models as discussed. An example of a shaped filling element 9ₛₒₗₗ is shown in fig. 8, with the original inner surface 33 schematically shown partly in broken lines 35, and the shaped inner surface 33' in solid lines 36. The standard filling element 9 can be curved according to the diameters of the inner and outer surfaces 6, 7 of the model, such that a series of such elements can fill the interspace 8 in a side-by-side position, having side surfaces 37 fitting against each other or at least in close adjacent position.

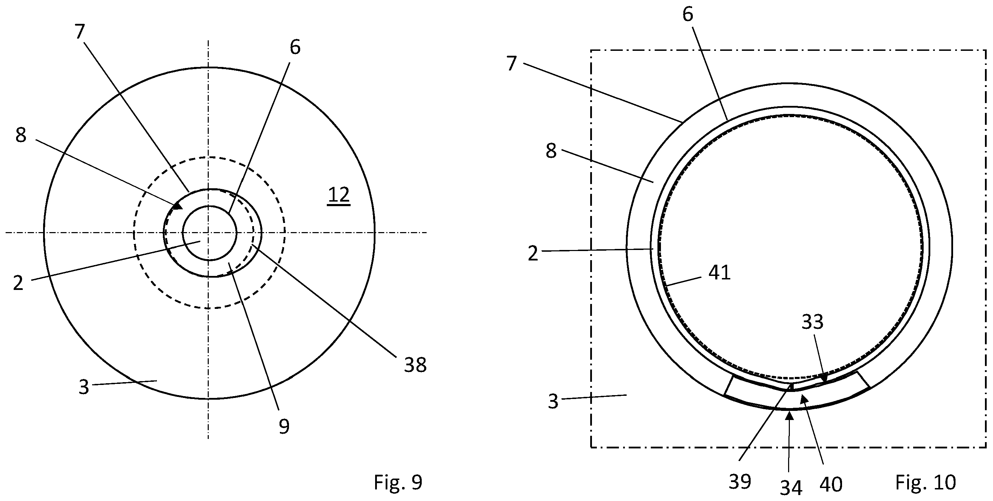

Fig. 9 shows in top view in solid lines the platform 3 and pile 2, with the platform at the predefined level of the upper surface 12 of the platform 3 relative to the pile 2, as for example shown in fig. 1 and 3. In this embodiment the upper end of the opening 4 is shown as non-circular, substantially oval 38, whereas the cross section of the pile 2 at said predetermined level is shown in striped line, which is circular. In this embodiment a filling element 9 is provided between the platform 3 and the pile 2, shaped such that the filling element 9 compensates for the non-circularity, filling the interspace 8 between the pile 2 and platform 3. In the drawings angles and deviations are shown not necessarily to scale, for purpose of a better visibility and understanding.

Fig. 10 shows another embodiment of part of a platform 3 on a pile 2, in top view. The pile 2 in this embodiment has been made of metal, rolled from metal plate wherein meeting ends of the plate are welded together, forming a closing weld 39. Due to the rolling process and/or the welding, bringing heat locally into the metal, the pile 2 can comprising a slightly bulging area 40 around the weld 39. This can mean that the pile at that location deviates from a desired circular cross section, as drawn in as a circle 41 in striped line. In embodiments like shown in fig. 10 this can be accommodated for by a filling element 9ₛₒₗₗ which has been shaped such that the inner surface 33 is provided with a surface portion fitting said bulging deviation 40 of the pile 2. In fig. 10 only the one filling element is shown. The rest of the interspace 8 can be filled with further filling elements 9, 9ₛₒₗₗ, which may or may not be amended from standard filling elements 9.

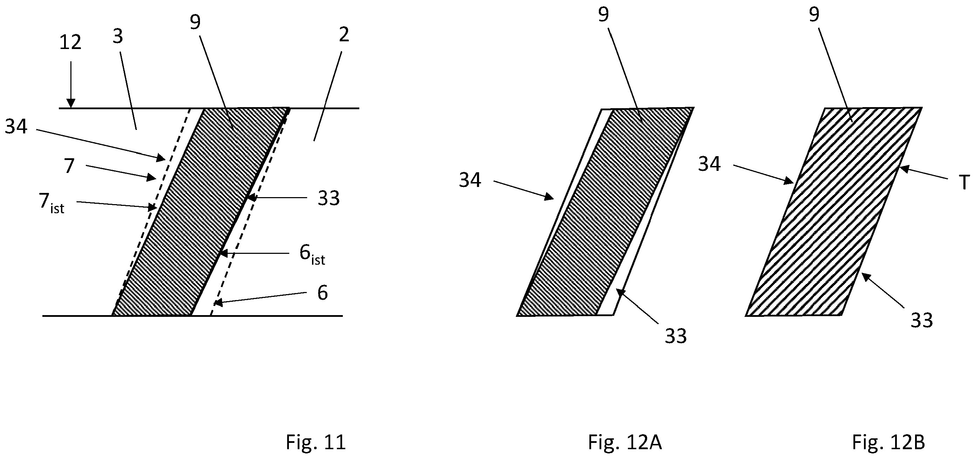

Fig. 11 shows in cross sectional side view part of a platform 3 mounted over a pile 2, wherein the actual interspace 8 is shown, filled with a filling element 9, wherein the actual surface 6ᵢₛₜ of the pile 2 is shown in solid line, the originally desired surface 6 in broken line, whereas the actual surface 7ᵢₛₜ of the opening 4 is shown in solid line, the originally desired surface 7 on broken line. Fig. 12A shows in cross sectional side view a filling element 9, shaped for filling the interspace 8 in fig. 11, whereas fig. 12B shows such filling element for filling a desired interspace 8. In fig. 12A the inside surface 33 of the filling element 9 has been made more concave and with a different incline than the inner surface 33 of the filling element of fig. 12B, whereas the outer surface 34 is made to have a different inclination as well than the outer surface of the element shown in fig. 12A.

It shall be clear that the filling elements 9 can also be integrally made to fit an interspace 8, based on at least scanning data of the actual surfaces 6, 7 of the pile 2 and platform 3, instead of being made from a standard filling element. A standard filling element preferably will be sized to fit an interspace 8 having a maximum expected size, such that the elements 9 can be reduced in size in order to fit smaller interspaces. Alternatively or additionally material can be added to a standard filling element 9.

The invention is by no means limited to the embodiments disclosed herein by way of example only. The invention is defined by the appended claims.

For example, in the drawings filling elements 9 are shown in a side-by-side relationship. In embodiments however filling elements can also be provided in two or more rows above each other. In the embodiments disclosed the inner and outer surfaces 33, 34 of the filling elements are substantially in full contact with the surfaces 6, 7 of the pile and opening respectively. However, one or both of these surfaces could be provided with for example a groove, for example for guiding water or air. The filling elements can be made of different materials, especially different plastic or combinations of materials, such as different plastics or a combination of metal covered by plastics.

## Claims

1. Method for fitting a platform (3) on an upper end (5) of a foundation pile (2), wherein said upper end (5) has a truncated conical outer surface (6), and wherein the platform (3) has an opening (4) fitting over said upper end (5) of the pile (2), said opening (4) provided with a peripheral wall (7) defining a truncated conical shape, wherein between the truncated conical outer surface (6) of the pile (2) and the peripheral wall (7) of the opening (4) at least one filling element (9) is positioned, wherein prior to fitting the platform (3) over the pile (2) a first scan is made of at least a portion of the truncated outer surface (6) of the pile (2) and a second scan is made of at least a portion of the peripheral wall (7) of the opening (4), wherein the shape of the at least one filling element (9) is formed and/or amended based on said first scan and second scan.

2. Method according to claim 1, wherein the pile (2) is made of a first material, the platform (3) is made of a second material and the at least one filling element (9) is made of a third material.

3. Method according to claim 2, wherein the third material is more pliable than the first material and the second material.

4. Method according to claim 2 or 3, wherein the first material is metal, the second material is concrete and the third material is plastic, such as PU.

5. Method according to any one of the previous claims, wherein a series of filling elements (9) is provided between the pile (2) and the platform (3), wherein the shape of the individual filling elements (9) is formed and/or amended based on said first and said second scan.

6. Method according to claim 5, wherein the filling elements (9) are provided in a side-by-side arrangement, forming a ring of such filling elements (9) around the said surface (6) of the pile, between the truncated conical outer surface (6) of the pile (2) and the peripheral surface (7) of the opening (4).

7. Method according to any one of the previous claims, wherein the or each filling element (9) is formed and/or amended based on a specific position between the platform (3) and the pile (2).

8. Method according to any one of the previous claims, wherein the or each first scan and the or each second scan is made using at least one scanner (21), preferably a laser scanner, wherein scanning data of the at least one laser scanner is fed into a computer system (27), wherein a computer program is provided in said computer system for processing said scanning data.

9. Method according to claim 8, wherein the computer program comprises a computer model of a desired truncated conical surface (6) of the foundation pile (2) and a computer model of a desired peripheral wall (7) of the opening (4), wherein the computer program is designed for comparing the scanning data with the computer models and defining a computer defined shape of the at least one filling element (9) based on such comparison.

10. Method according to claim 8 or 9, wherein the computer system (4) comprises a computer model of a standard filling element (9), and wherein the computer program is further designed to define a computer machining program for machining said standard filling element (9) based on a comparison between the computer model of the standard filling element and the computer defined shape of said at least one filling element (9).

11. Method according to any one of claim 8 - 10, wherein the computer program comprises a computer model of a preferred interspace (8) between said peripheral surface of the opening (4) and said truncated conical surface (6) of the pile (2), wherein based on said scanning data deviations between the actual interspace and the preferred interspace are calculated, and wherein the or each filling element (9) is machined based on said calculated deviations.

12. Method of forming and/or amending a filling element (9) for use in fitting a platform (3) with an opening (4) over an upper end (5) of a foundation pile (2), wherein said upper end (5) has a truncated conical outer surface (6), and wherein the platform (3) has an opening (4) fitting over said upper end (5) of the pile (2), said opening (4) provided with a peripheral wall (7) defining a truncated conical shape, wherein a first scan is made of at least a first portion of the surface (6) of the pile (2) at a predetermined position and a second scan is made of at least a first portion of a peripheral surface (7) of the peripheral wall of said opening (4) of the platform (3), opposite the first portion of the pile surface, wherein the at least one filling element (9) is machined, based on the first scan and second scan, to be fitted between said first portion of the surface (6) of the foundation pile (2) and said first portion of the peripheral surface (7) of the opening (4), in close contact with the first surface portions (6,7).

13. Method according to claim 12, wherein said at least one filling element (9) is machined such that during use it fills the interspace (8) between said first surface portions.

14. Method according to any one of claims 12 or 13, wherein a series of filling elements (9) is machined for filling the interspace (8) between the surface (6) of the foundation pile (2) at said predefined position and the peripheral surface (7) of the opening (4), in a side-by-side arrangement of the filling elements (9).

## Patentansprüche

1. Verfahren zum Anbringen einer Plattform (3) an einem oberen Ende (5) eines Fundamentpfahls (2), wobei das obere Ende (5) eine kegelstumpfförmige äußere Oberfläche (6) aufweist und wobei die Plattform (3) eine Öffnung (4) aufweist, die über das obere Ende (5) des Pfahls (2) passt, wobei die Öffnung (4) mit einer Umfangswand (7) versehen ist, die eine kegelstumpfförmige Form definiert, wobei zwischen der kegelstumpfförmigen äußeren Oberfläche (6) des Pfahls (2) und der Umfangswand (7) der Öffnung (4) mindestens ein Füllelement (9) angeordnet ist, wobei vor dem Anbringen der Plattform (3) über den Pfahl (2) ein erster Scan mindestens eines Abschnitts der kegelstumpfförmigen äußeren Oberfläche (6) des Pfahls (2) und ein zweiter Scan mindestens eines Abschnitts der Umfangswand (7) der Öffnung (4) durchgeführt wird, wobei die Form des mindestens einen Füllelements (9) basierend auf dem ersten und dem zweiten Scan gebildet und/oder angepasst wird.

2. Verfahren nach Anspruch 1, wobei der Pfahl (2) aus einem ersten Material, die Plattform (3) aus einem zweiten Material und das mindestens eine Füllelement (9) aus einem dritten Material bestehen.

3. Verfahren nach Anspruch 2, wobei das dritte Material nachgiebiger ist als das erste Material und das zweite Material.

4. Verfahren nach Anspruch 2 oder 3, wobei das erste Material Metall, das zweite Material Beton und das dritte Material Kunststoff, beispielsweise PU, ist.

5. Verfahren nach einem der vorstehenden Ansprüche, wobei zwischen dem Pfahl (2) und der Plattform (3) eine Reihe von Füllelementen (9) vorgesehen ist, wobei die Form der einzelnen Füllelemente (9) basierend auf dem ersten und dem zweiten Scan gebildet und/oder angepasst wird.

6. Verfahren nach Anspruch 5, wobei die Füllelemente (9) nebeneinander angeordnet sind und einen Ring aus solchen Füllelementen (9) um die Oberfläche (6) des Pfahls bilden, und zwar zwischen der kegelstumpfförmigen äußeren Oberfläche (6) des Pfahls (2) und der Umfangsoberfläche (7) der Öffnung (4).

7. Verfahren nach einem der vorstehenden Ansprüche, wobei das oder jedes Füllelement (9) basierend auf einer bestimmten Position zwischen der Plattform (3) und dem Pfahl (2) gebildet und/oder angepasst wird.

8. Verfahren nach einem der vorstehenden Ansprüche, wobei der oder jeder erste Scan und der oder jeder zweite Scan unter Verwendung mindestens eines Scanners (21), vorzugsweise eines Laserscanners, durchgeführt wird, wobei die Scandaten des mindestens einen Laserscanners in ein Rechensystem (27) eingespeist werden, wobei in dem genannten Rechensystem ein Computerprogramm zur Verarbeitung der Scandaten vorgesehen ist.

9. Verfahren nach Anspruch 8, wobei das Computerprogramm ein Computermodell einer gewünschten, kegelstumpfförmigen Oberfläche (6) des Fundamentpfahls (2) und ein Computermodell einer gewünschten Umfangswand (7) der Öffnung (4) umfasst, wobei das Computerprogramm dazu ausgelegt ist, die Scandaten mit den Computermodellen zu vergleichen und basierend auf diesem Vergleich eine vom Computer definierte Form des mindestens einen Füllelements (9) zu definieren.

10. Verfahren nach Anspruch 8 oder 9, wobei das Computersystem (4) ein Computermodell eines Standardfüllelements (9) umfasst und wobei das Computerprogramm ferner dazu ausgelegt ist, ein computergestütztes Bearbeitungsprogramm zur Bearbeitung des Standardfüllelements (9) basierend auf einem Vergleich zwischen dem Computermodell des Standardfüllelements und der vom Computer definierten Form des mindestens einen Füllelements (9) zu definieren.

11. Verfahren nach einem der Ansprüche 8 bis 10, wobei das Computerprogramm ein Computermodell eines bevorzugten Zwischenraums (8) zwischen der Umfangsoberfläche der Öffnung (4) und der kegelstumpfförmigen Oberfläche (6) des Pfahls (2) umfasst, wobei basierend auf den Scandaten Abweichungen zwischen dem tatsächlichen Zwischenraum und dem bevorzugten Zwischenraum berechnet werden und wobei das oder jedes Füllelement (9) basierend auf den berechneten Abweichungen bearbeitet wird.

12. Verfahren zum Bilden und/oder Anpassen eines Füllelements (9) zur Verwendung beim Anbringen einer Plattform (3) mit einer Öffnung (4) über eine oberes Ende (5) eines Fundamentpfahls (2), wobei das obere Ende (5) eine kegelstumpfförmige äußere Oberfläche (6) aufweist und wobei die Plattform (3) eine Öffnung (4) aufweist, die über das obere Ende (5) des Pfahls (2) passt, wobei die Öffnung (4) mit einer Umfangswand (7) versehen ist, die eine kegelstumpfförmige Form definiert, wobei ein erster Scan mindestens eines ersten Abschnitts der Oberfläche (6) des Pfahls (2) an einer vorgegebenen Position und ein zweiter Scan mindestens eines ersten Abschnitts einer Umfangsoberfläche (7) der Umfangswand der Öffnung (4) der Plattform (3) durchgeführt wird, die dem ersten Abschnitt der Pfahloberfläche gegenüberliegt, wobei das mindestens eine Füllelement (9) basierend auf dem ersten und dem zweiten Scan so bearbeitet wird, dass es zwischen den ersten Abschnitt der Oberfläche (6) des Fundamentpfahls (2) und den ersten Abschnitt der Umfangsoberfläche (7) der Öffnung (4) passt und dabei in engem Kontakt mit den ersten Oberflächenabschnitten (6, 7) steht.

13. Verfahren nach Anspruch 12, wobei das mindestens eine Füllelement (9) so bearbeitet wird, dass es beim Verwenden den Zwischenraum (8) zwischen den ersten Oberflächenabschnitten ausfüllt.

14. Verfahren nach einem der Ansprüche 12 oder 13, wobei eine Reihe von Füllelementen (9) zum Ausfüllen des Zwischenraums (8) zwischen der Oberfläche (6) des Fundamentpfahls (2) an der vorbestimmten Position und der Umfangsoberfläche (7) der Öffnung (4) bearbeitet wird, wobei die Füllelemente (9) nebeneinander angeordnet sind.

## Revendications

1. Procédé pour monter une plateforme (3) sur une extrémité supérieure (5) d'un pieu de fondation (2), dans lequel ladite extrémité supérieure (5) a une surface externe conique tronquée (6) et dans lequel la plateforme (3) a une ouverture (4) se montant sur ladite extrémité supérieure (5) du pieu (2), ladite ouverture (4) prévue avec une paroi périphérique (7) définissant une forme conique tronquée, dans lequel entre la surface externe conique tronquée (6) du pieu (2) et la paroi périphérique (7) de l'ouverture (4), au moins un élément de remplissage (9) est positionné, dans lequel avant de monter la plateforme (3) sur le pieu (2), on réalise un premier balayage d'au moins une partie de la surface externe tronquée (6) du pieu (2) et on réalise un deuxième balayage d'au moins une partie de la paroi périphérique (7) de l'ouverture (4), dans lequel la forme du au moins un élément de remplissage (9) est formée et/ou modifiée sur la base dudit premier balayage et du deuxième balayage.

2. Procédé selon la revendication 1, dans lequel le pieu (2) est réalisé avec un premier matériau, la plateforme (3) est réalisée avec un deuxième matériau et le au moins un élément de remplissage (9) est réalisé avec un troisième matériau.

3. Procédé selon la revendication 2, dans lequel le troisième matériau est plus pliable que le premier matériau et que le deuxième matériau.

4. Procédé selon la revendication 2 ou 3, dans lequel le premier matériau est du métal, le deuxième matériau est du béton et le troisième matériau est du plastique, tel que du PU.

5. Procédé selon l'une quelconque des revendications précédentes, dans lequel une série d'éléments de remplissage (9) est prévue entre le pieu (2) et la plateforme (3), dans lequel la forme des éléments de remplissage (9) individuels est formée et/ou modifiée sur la base dudit premier et dudit deuxième balayage.

6. Procédé selon la revendication 5, dans lequel les éléments de remplissage (9) sont prévus dans un agencement côte à côte, formant un anneau de ces éléments de remplissage (9) autour de ladite surface (6) du pieu, entre la surface externe conique tronquée (6) du pieu (2) et la surface périphérique (7) de l'ouverture (4).

7. Procédé selon l'une quelconque des revendications précédentes, dans lequel le ou chaque élément de remplissage (9) est formé et/ou modifié sur la base d'une position spécifique entre la plateforme (3) et le pieu (2).

8. Procédé selon l'une quelconque des revendications précédentes, dans lequel le ou chaque premier balayage et le ou chaque deuxième balayage sont réalisés à l'aide d'au moins un scanner (21), de préférence un scanner laser, dans lequel des données de balayage du au moins un scanner laser sont transmises dans un système informatique (27), dans lequel un programme informatique est prévu dans ledit système informatique pour traiter lesdites données de balayage.

9. Procédé selon la revendication 8, dans lequel le programme informatique comprend un modèle informatique d'une surface conique tronquée (6) souhaitée du pieu de fondation (2) et un modèle informatique d'une paroi périphérique (7) souhaitée de l'ouverture (4), dans lequel le programme informatique est conçu pour comparer les données de balayage avec les modèles informatiques et définir une forme définie par ordinateur du au moins un élément de remplissage (9) sur la base d'une telle comparaison.

10. Procédé selon la revendication 8 ou 9, dans lequel le système informatique (4) comprend un modèle informatique d'un élément de remplissage standard (9), et dans lequel le programme informatique est en outre conçu pour définir un programme d'usinage informatique pour usiner ledit élément de remplissage standard (9) sur la base d'une comparaison entre le modèle informatique de l'élément de remplissage standard et la forme définie par ordinateur dudit au moins un élément de remplissage (9).

11. Procédé selon l'une quelconque des revendications 8 à 10, dans lequel le programme informatique comprend un modèle informatique d'un espace intermédiaire préféré (8) entre ladite surface périphérique de l'ouverture (4) et ladite surface conique tronquée (6) du pieu (2), dans lequel sur la base desdites données de balayage, on calcule les écarts entre le véritable espace intermédiaire et l'espace intermédiaire préféré, et dans lequel le ou chaque élément de remplissage (9) est usiné sur la base desdits écarts calculés.

12. Procédé pour former et/ou modifier un élément de remplissage (9) destiné à être utilisé pour monter une plateforme (3) avec une ouverture (4) sur une extrémité supérieure (5) d'un pieu de fondation (2), dans lequel ladite extrémité supérieure (5) a une surface externe conique tronquée (6), et dans lequel la plateforme (3) a une ouverture (4) s'ajustant sur ladite extrémité supérieure (5) du pieu (2), ladite ouverture (4) prévue avec une paroi périphérique (7) définissant une forme conique tronquée, dans lequel on réalise un premier balayage d'au moins une première partie de la surface (6) du pieu (2) dans une position prédéterminée et on réalise un deuxième balayage d'au moins une première partie d'une surface périphérique (7) de la paroi périphérique de ladite ouverture (4) de la plateforme (3), opposée à la première partie de la surface de pieu, dans lequel le au moins un élément de remplissage (9) est usiné, sur la base du premier balayage et du deuxième balayage, pour être monté entre ladite première partie de la surface (6) du pieu de fondation (2) et ladite première partie de la surface périphérique (7) de l'ouverture (4), en contact étroit avec les premières parties de surface (6, 7).

13. Procédé selon la revendication 12, dans lequel ledit au moins un élément de remplissage (9) est usiné de sorte que pendant l'utilisation, il remplit l'espace intermédiaire (8) entre lesdites premières parties de surface.

14. Procédé selon l'une quelconque des revendications 12 ou 13, dans lequel une série d'éléments de remplissage (9) est usinée pour remplir l'espace intermédiaire (8) entre la surface (6) du pieu de fondation (2) dans ladite position prédéfinie et la surface périphérique (7) de l'ouverture (4), dans un agencement côte à côte des éléments de remplissage (9).
